# EUROPÄISCHE PATENTANMELDUNG

(11) **EP 4 693 778 A1**
(43) Veröffentlichungstag der Anmeldung: **11.02.2026**
(21) Anmeldenummer: 24193913.1
(22) Anmeldetag: 09.08.2024
(51) Int. Cl.: H02G 3/04, H02G 3/06

(54) **KLAMMERELEMENT ZUR FIXIERUNG EINES SCHUTZROHRES AUF EINEM WELLROHR**

(71) Anmelder: Intercable GmbH, 39031 Bruneck (IT)
(72) Erfinder: BAUMGARTNER, Christoph, 39031 Bruneck (IT)
(74) Vertreter: Maiwald GmbH

(57) **Zusammenfassung**

Die Offenbarung umfasst ein Klammerelement (1) zur Fixierung eines Schutzrohres (80) auf einem Wellrohr (50), aufweisend:
- ein erstes Ringelement (2),
- ein rundes Deckelelement (30), welches stirnseitig an dem ersten Ringelement (2) angebracht ist, wobei das Deckelelement (30) aus einem ersten Keilelement (6-1) und einem gegenüber einer Längsachse (5) des Klammerelements (1) angeordneten zweiten Keilelement (6-2) sowie aus einem ersten Halteelement (7-1) und gegenüber der Längsachse (5) angeordneten mindestens einem zweiten Halteelement (7-2) besteht,
- wobei die Keilelemente (6-1, 6-2) direkt mit dem ersten Ringelement (2) und die Halteelemente (7-1, 7-2) über ein erstes Verbindungselement (12) im Inneren (8) des ersten Ringelements (2) mit dem ersten Ringelement (2) verbunden sind,
wobei die Keilelemente (6-1, 6-2) und die Halteelemente (7-1, 7-2) jeweils in einer radialen Umfangsrichtung um die Längsachse (5) des Klammerelements (1) voneinander beabstandet sind und sich diese ferner in einer radialen Richtung hin zur Längsachse (5) des ersten Ringelements (2) derart erstrecken, dass jeweilige Endabschnitte (9) der Keilelemente (6-1, 6-2) und Endabschnitte (10) der Halteelemente (7-1, 7-2) eine ovale Öffnung (11) mit einem ersten Durchmesser innerhalb des Deckelelements (30) bilden.

## Beschreibung

### TECHNISCHES GEBIET

Die vorliegende Erfindung bezieht sich auf ein Klammerelement zur Fixierung eines Schutzrohres auf einem Wellrohr.

### HINTERGRUND DER ERFINDUNG

Im Stand der Technik ist es gemäß der EP 332 462 B1 bekannt, zum Schutz eines an einem Kabel angeschlossenen elektronischen Geräts vor Hitzeeinwirkung ein Schutzrohr, zum Beispiel in Form einer Thermohülle, vorzusehen. Die Verbindung des Schutzrohres mit dem Kabel erfolgt, wie in Fig. 4 der EP 332 462 B1 mittels einer Art zylindrisch ausgeformtes Positionierungselements, welches an einem Ende des Schutzrohres aufgesteckt wird. Das Positionierungselement umfasst elastische Elemente, die konzentrisch angeordnet sind und deren nach Innen gerichtete Enden eine Durchgangsöffnung für das aufzunehmende Kabel bilden. Beim Positionieren und Fixieren des Kabels mit dem Positionierungselement wird diese durch die Durchgangsöffnung des Positionierungselements geführt. Die elastischen Elemente des Positionierungselements sind dabei beweglich und greifen in die Außenhülle des Kabels ein und ermöglichen so eine entsprechende Fixierung der Position des Kabels.

Nachteilig an dieser Ausführungsform ist jedoch, dass die Fixierung und Positionierung des Kabels mit einigem Kraftaufwand erforderlich ist und deshalb durchaus umständlich ist.

Es ist daher die Aufgabe der vorliegenden Erfindung, eine verbesserte Lösung bereitzustellen, um ein Schutzrohr auf einem Kabel, insbesondere einem Wellrohr, zu fixieren.

### ZUSAMMENFASSUNG DER ERFINDUNG

Diese Aufgabe wird durch ein Klammerelement zur Fixierung eines Schutzrohres auf einem Wellrohr mit den Merkmalen des unabhängigen Anspruchs gelöst.

Gemäß einem ersten Aspekt betrifft die Offenbarung ein Klammerelement zur Fixierung eines Schutzrohres auf einem Wellrohr, das folgende Merkmale aufweist: ein erstes Ringelement, ein rundes Deckelelement, welches stirnseitig an dem ersten Ringelement angebracht ist. Das Deckelelement besteht aus einem ersten Keilelement und einem gegenüber einer Längsachse des Klammerelements angeordneten zweiten Keilelement sowie aus einem ersten Halteelement und gegenüber der Längsachse angeordneten mindestens einem zweiten Halteelement. Die Keilelemente sind direkt mit dem ersten Ringelement und die Halteelemente über ein erstes Verbindungselement im Inneren des ersten Ringelements mit dem ersten Ringelement verbunden. Die Keilelemente und die Halteelemente sind jeweils in einer radialen Umfangsrichtung um die Längsachse des Klammerelements voneinander beabstandet und diese erstrecken sich ferner derart in einer radialen Richtung hin zur Längsachse des ersten Ringelements, dass jeweilige Endabschnitte der Keilelemente und Endabschnitte der Halteelemente eine ovale Öffnung mit einem ersten Durchmesser innerhalb des Deckelelements bilden. Das erste Ringelement ist derart elastisch formbar ausgebildet, dass bei einem gleichzeitigen Zusammendrücken der beiden Keilelemente diese sich in Bezug auf die Längsachse des Klammerelements aufeinander zu bewegen und sich deren Abstand zueinander verringert und dabei gleichzeitig die an die Keilelemente angrenzenden Halteelemente von der Längsachse wegbewegen und auseinander gezogen werden und sich deren Abstand zueinander vergrößert, sodass sich die Öffnung von dem ersten Durchmesser auf einen zweiten Durchmesser vergrößert.

Ein grundlegender Gedanke der vorliegenden Erfindung besteht darin, dass durch Zusammendrücken des Ringelements an den beiden Keilelementen bzw. einer beidseitigen und gleichzeitigen Krafteinleitung an einem ersten und einem dem ersten gegenüberliegenden zweiten Krafteinleitungspunkt, wobei sich der erste Krafteinleitungspunkt am ersten Keilelement und der zweite Krafteinleitungspunkt am zweiten Keilelement befindet, das Ringelement derart auseinander gezogen wird, dass sich die Öffnung bzw. von dem Deckelelement gebildet gebildete Durchgangsöffnung aufspreizen kann und so das Wellrohr sehr einfach durch das Klammerelement geschoben werden kann ohne dass die Halteelemente des Deckelelements das Wellrohr dabei berühren. Dadurch wird das Wellrohr, in dem sich das Kabel befindet, bei dem Vorgang der Positionierung und der Fixierung nicht in Mitleidenschaft gezogen und die Außenhülle des Wellrohrs bleibt dabei unbeschadet. Um das Wellrohr mit dem Klammerelement zu fixieren, wird einfach die beidseitige Krafteinleitung an den beiden Keilelementen des Ringelements beendet, so dass das Ringelement wieder in seine ursprüngliche Ausgangsposition zurückkehren kann. Die inneren Kanten der beiden gegenüber angeordneten Halteelemente des Deckelelements greifen bzw. rasten dann in eine Oberfläche bzw. Außenseite oder Außenwand des Wellrohres ein und ermöglichen auf diese Weise eine temporäre Fixierung des Wellrohrs mit dem Ringelement. Soll das Wellrohr wieder entfernt werden oder deren Länge innerhalb des Ringelements angepasst werden, dann muss lediglich der zuvor beschriebene Vorgang wiederholt werden, also ein Zusammendrücken der beiden Keilelemente des Ringelements erfolgen, um die Fixierung des Wellrohrs zu lösen und es heraus- oder je nach Anwendung weiter in das Ringelement an eine entsprechende Position hineinzuschieben. Das Ringelement selbst kann dabei vor oder nach der Positionierung des Wellrohrs auf das Schutzrohr aufgebracht werden.

Die vorliegende Erfindung hat den Vorteil, dass sehr leicht und einfach, ohne großen Kraftaufwand und ohne das Wellrohr selbst zu beschädigen, eine einfache Verstellung der Positionierung des Wellrohrs relativ zu dem Ringelement ermöglicht wird.

Ferner wird bei der Positionierung des Wellrohrs dieses nicht beschädigt, da durch die Aufspreizung oder Dehnung des Ringelements die Außenseite bzw. Außenwand des Wellrohrs die Halteelemente des Deckelelemente des Ringelements in der Regel nicht berührt. Dadurch wird das Material des Wellrohrs geschont und es muss ferner nur wenig Kraft aufgewendet werden, das Wellrohr innerhalb des Ringelements zu verschieben und zu positionieren.

Ferner wird aufgrund des eingefügten Trennungselements zwischen den Kabelaufnahmekammern des Profilelements wird eine Oxidation der Litzen des Kabels verhindert, da beim Verpressen des Profilelements zu einem Kabelschuh sich das Material des Trennungselements mit den Litzen des Kabels verbindet.

Mit dem erfindungsgemäßen Klammerelement ist die Fixierung des Wellrohrs leicht lösbar und dessen anwendungsspezifische Positionierung kraftlos bzw. nur mit einem sehr geringen Kraftaufwand einstellbar. Gleichzeitig wird zur Fixierung des Wellrohrs aber eine große Haltekraft bereitgestellt, welche auch dadurch entsteht, indem die Kanten der Halteelemente in die Täler des Wellrohrs einhaken und verrasten, nachdem das Wellrohr an eine entsprechende Ende- oder Halteposition gebracht wurde.

Eine mögliche Ausgestaltung der vorliegenden Erfindung besteht darin, dass der Profilkörper an mindestens einer Außenseite eine Materialaussparung aufweist, welche in der Längsrichtung des Profilelements angeordnet ist und wobei ferner die Materialaussparung in einem Bereich des Profilkörpers angeordnet ist, der die mindestens zwei Kabelaufnahmekammern voneinander trennt. Dadurch wird der Vorteil erreicht, dass beim Verpressen des Profilelements zu einem Kabelschuh, das Material des Trennelements in die Materialaussparung ausweichen kann und die elektrische Leitfähigkeit des Kabelschuhs zumindest beibehalten wird.

Eine mögliche Ausgestaltung der vorliegenden Erfindung sieht vor, dass die Endabschnitte der sich gegenüberliegenden Halteelemente in Bezug auf die Längsachse des Klammerelements einen kleineren Abstand aufweisen als die Endabschnitte der sich gegenüberliegenden Keilelemente, so dass die Öffnung einen Durchmesser aufweist, der kleiner ist als das zu fixierende und aufzunehmende Wellrohr. Dadurch wird der Vorteil erreicht, dass das Wellrohr mit dem Ringelement einfach zu fixieren ist.

Eine mögliche Ausgestaltung der vorliegenden Erfindung sieht vor, dass an einem ersten Abschnitt im Inneren des ersten Ringelements mindestens ein erstes Hakenelement angebracht ist, welches sich in einer entgegengesetzten Richtung vom Deckelelement weg sowie in Richtung der Längsachse des Klammerelements erstreckt, wobei das erste Hakenelement ferner ausgebildet ist, sich auf einer Innenseite des von dem Klammerelement umschlossenen Schutzrohres einzuhaken. Dadurch wird der Vorteil erreicht, dass das Schutzrohr einfach fixiert werden kann und eine Relativbewegung zwischen dem Ringelement und dem Schutzrohr wird verhindert oder zumindest erschwert.

Eine mögliche Ausgestaltung der vorliegenden Erfindung sieht vor, dass an einem zweiten Abschnitt im Inneren des ersten Ringelements mindestens ein zweites Hakenelement angebracht ist, welches sich in einer entgegengesetzten Richtung vom Deckelelement weg sowie in Richtung der Längsachse des Klammerelements erstreckt, wobei das zweite Hakenelement ferner ausgebildet ist, sich auf einer Außenseite des von dem Klammerelement umschlossenen Schutzrohres einzuhaken. Dadurch wird der Vorteil erreicht, dass das Schutzrohr einfach fixiert werden kann und eine Relativbewegung zwischen dem Ringelement und dem Schutzrohr wird verhindert oder zumindest erschwert.

Eine mögliche Ausgestaltung der vorliegenden Erfindung sieht vor, dass das erste Hakenelement aus mindestens zwei ersten Hakenelementen besteht, welche in Bezug auf die Längsachse des Klammerelements in radialer Umfangsrichtung des ersten Ringelements gegenüberliegend angeordnet sind und / oder wobei das zweite Hakenelement aus mindestens zwei zweiten Hakenelementen besteht, welche in Bezug auf die Längsachse des Klammerelements in radialer Umfangsrichtung des ersten Ringelements gegenüberliegend angeordnet sind. Dadurch wird der Vorteil erzielt, dass eine Relativbewegung zwischen dem Ringelement und dem Schutzrohr verhindert oder zumindest erschwert und eine einfache Fixierung des Schutzrohrs ermöglicht wird.

Eine mögliche Ausgestaltung der vorliegenden Erfindung sieht vor, dass das Klammerelement ein zweites Ringelement vorsieht, welches von dem ersten Ringelement über mindestens ein zweites Verbindungselement beabstandet angeordnet ist und wobei beide Ringelemente entlang der Längsachse des Klammerelements einen röhrenförmigen Körper bilden. Dadurch wird der Vorteil erzielt, dass das Schutzrohr besonders fest mit dem Klammerelement fixiert werden kann.

Eine mögliche Ausgestaltung der vorliegenden Erfindung sieht vor, dass das zweite Ringelement mindestens ein Sperrelement aufweist, welches an einer Innenseite des zweiten Ringelements angeordnet ist und sich in Richtung der Längsachse des Klammerelements erstreckt. Dadurch wird eine besondere einfache und robuste Fixierung des Schutzrohrs mit dem Klammerelement ermöglicht.

Eine mögliche Ausgestaltung der vorliegenden Erfindung sieht vor, dass das Klammerelement aus einem kunststoffartigen Material besteht. Dadurch wird der Vorteil einer einfachen und kostengünstigen Herstellung des Klammerelements ermöglicht.

Eine mögliche Ausgestaltung der vorliegenden Erfindung sieht vor, dass das mindestens erste Verbindungselement zur Verbindung der beiden Ringelemente an seiner Außenseite als eine aufgeraute Verbindungsrippe ausgebildet ist. Dadurch wird der Vorteil erzielt, dass das Greifen und Aufnehmen des Klammerelements erleichtert wird, wenn es auf dem Schutzrohr aufgesteckt werden soll bzw. das Wellrohr innerhalb des Ringelements des Kammerelements positioniert und fixiert werden soll.

Gemäß einem zweiten Aspekt betrifft die vorliegende Offenbarung eine Hülsenanordnung zum Schützen eines elektronischen Elements, das mit einem Wellrohr befestigt ist, umfassend ein Schutzrohr und ein Klammerelement nach einem der vorangegangenen Ausgestaltungen, wobei das Klammerelement ausgebildet ist, das Schutzrohr mit dem Wellrohr zu fixieren.

### KURZE BESCHREIBUNG DER FIGUREN

Weitere, die Erfindung verbessernde Maßnahmen werden nachstehend gemeinsam mit der Beschreibung der bevorzugten Ausführungsbeispiele der Erfindung anhand von Figuren näher dargestellt. Es zeigt:
Figur 1 Klammerelement mit zwei Ringelementen in einer Vorderansicht gemäß einer Ausführungsform der vorliegenden Erfindung;
Figur 2 Klammerelement mit zwei Ringelementen gemäß einer Ausführungsform der vorliegenden Erfindung;
Figur 3 Klammerelement mit zwei Ringelementen gemäß einer Ausführungsform der vorliegenden Erfindung;
Figur 4 Klammerelement mit einem Ringelement und Wellrohr in Schnittdarstellung in einer Ausgangs- oder Einführposition gemäß einer Ausführungsform der vorliegenden Erfindung;
Figur 5 Klammerelement mit einem Ringelement und Wellrohr in Schnittdarstellung in einer Halte- oder Fixierposition gemäß einer Ausführungsform der vorliegenden Erfindung;
Figur 6 Klammerelement mit einem Ringelement und Wellrohr in Schnittdarstellung in einer Halte- oder Fixierposition gemäß einer Ausführungsform der vorliegenden Erfindung;
Figur 7 Klammerelement mit zweiteiligem Ringelement und Wellrohr verbunden mit einem Schutzrohr in einer Hülsenanordnung gemäß einer Ausführungsform der vorliegenden Erfindung;
Figur 8 Klammerelement mit zweiteiligem Ringelement und Wellrohr verbunden mit einem Schutzrohr in einer Hülsenanordnung gemäß einer Ausführungsform der vorliegenden Erfindung;
Figur 9-1 Klammerelement mit zweiteiligem Ringelement und Wellrohr verbunden mit einem Schutzrohr in einer Hülsenanordnung in Seitenansicht gemäß einer Ausführungsform der vorliegenden Erfindung;
Figur 9-2 Klammerelement mit zweiteiligem Ringelement und Wellrohr verbunden mit einem Schutzrohr in Vorderansicht in einer Hülsenanordnung gemäß einer Ausführungsform der vorliegenden Erfindung;
Figur 9-3 Klammerelement mit zweiteiligem Ringelement und Wellrohr verbunden mit einem Schutzrohr in Rückansicht in einer Hülsenanordnung gemäß einer Ausführungsform der vorliegenden Erfindung;
Figur 10 Klammerelement mit zweiteiligem Ringelement und Wellrohr verbunden mit einem Schutzrohr in einer Hülsenanordnung in Draufsicht gemäß einer Ausführungsform der vorliegenden Erfindung;
Figur 11-1 Klammerelement mit zweiteiligem Ringelement und Wellrohr mit einem Schutzrohr in Explosionsdarstellung gemäß einer Ausführungsform der vorliegenden Erfindung;
Figur 11-2 Klammerelement mit zweiteiligem Ringelement und Wellrohr mit einem Schutzrohr in Explosionsdarstellung im Schnitt von der Seite gemäß einer Ausführungsform der vorliegenden Erfindung;
Figur 11-3 Klammerelement mit zweiteiligem Ringelement und Wellrohr mit einem Schutzrohr in Explosionsdarstellung im Schnitt gemäß einer Ausführungsform der vorliegenden Erfindung.

### DETAILLIERTE BESCHREIBUNG DER ERFINDUNG

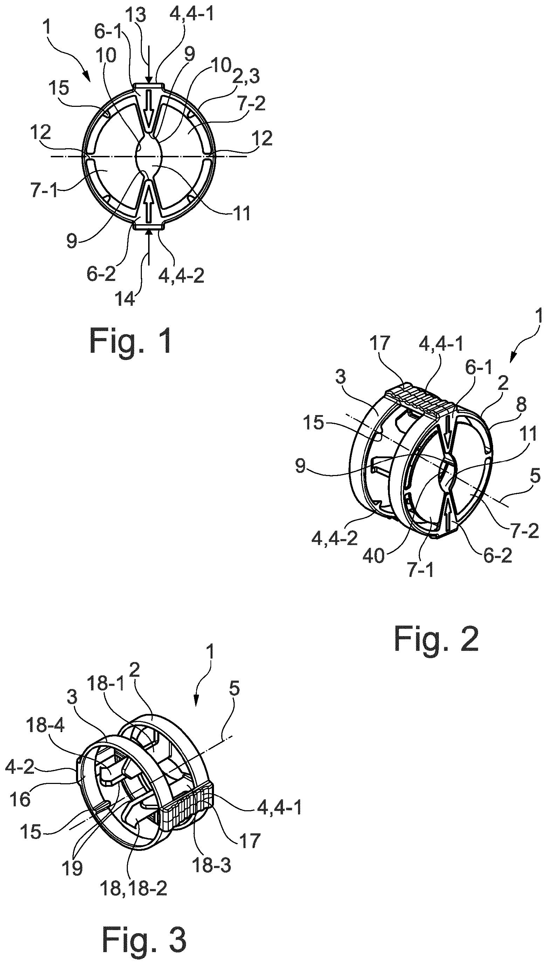

Figur 1 zeigt ein Klammerelement 1 mit zwei Ringelementen 2, 3 in einer Vorderansicht gemäß einer Ausführungsform der vorliegenden Erfindung. Zum Besseren Verständnis wird im nachfolgenden zudem auch auf die Figuren 2 und 3 verwiesen, die das Klammerelement 1 in jeweils einer anderen Perspektive zeigen, um die Details des Aufbaus besser darstellen zu können.

Das Klammerelement 1 zur Fixierung eines Schutzrohres 80 auf einem Wellrohr 50, weist ein erstes Ringelement 2 auf, ein rundes Deckelelement 30, welches stirnseitig an dem ersten Ringelement 2 angebracht ist. Das Deckelelement 3 besteht aus einem ersten Keilelement 6-1 und einem gegenüber einer Längsachse 5 des Klammerelements 1 angeordneten zweiten Keilelement 6-2 sowie aus einem ersten Halteelement 7-1 und gegenüber der Längsachse 5 angeordneten mindestens einem zweiten Halteelement 7-2.

Die beiden Keilelemente 6-1, 6-2 sind direkt mit dem ersten Ringelement 2 und die Halteelemente 7-1, 7-2 über ein erstes Verbindungselement 12 im Inneren 8 des ersten Ringelements 2 mit dem ersten Ringelement 2 verbunden.

Die beiden Keilelemente 6-1, 6-2 und die beiden Halteelemente 7-1, 7-2 sind jeweils in einer radialen Umfangsrichtung um die Längsachse 5 des Klammerelements 1 voneinander beabstandet und diese erstrecken sich ferner in einer radialen Richtung hin zur Längsachse 5 des ersten Ringelements 2 derart, dass jeweilige Endabschnitte 9 der Keilelemente 6-1, 6-2 und Endabschnitte 10 der Halteelemente 7-1, 7-2 eine ovale Öffnung oder Durchgangsöffnung 11 mit einem ersten Durchmesser innerhalb des Deckelelements 3 bilden.

Das erste Ringelement 2 ist derart elastisch formbar ausgebildet, dass bei einem gleichzeitigen Zusammendrücken der beiden Keilelemente 6-1, 6-2 diese sich in Bezug auf die Längsachse 5 des Klammerelements 1 aufeinander zu bewegen und sich deren Abstand zueinander verringert. Dabei bewegen sich gleichzeitig die an die beiden Keilelemente 6-1, 6-2 angrenzenden Halteelemente 7-1, 7-2 von der Längsachse 5 weg und werden in Querrichtung zur Längsachse 5 auseinander gezogen oder auseinandergespreizt, sodass sich der Abstand der beiden Halteelemente 7-1, 7-2 des ersten Ringelements 2 zueinander vergrößert und sich die Öffnung bzw. Durchgangsöffnung 11 von dem ersten Durchmesser auf einen zweiten Durchmesser vergrößert.

Durch das Zusammendrücken des ersten Ringelements 2 wird also beidseitig jeweils an den beiden Keilelementen 6-1, 6-2 gleichzeitig eine Kraft an einem ersten Krafteinleitungspunkt 13, welcher sich an dem ersten Keilelement 6-1 befinden, und an einem dem ersten gegenüberliegenden zweiten Krafteinleitungspunkt 14, welcher sich an dem zweiten Keilelement 6-2 befindet, das erste Ringelement 2 derart und in seine Breite bzw. quer zur Längsachse 5 auseinander gezogen oder gespreizt, dass der Durchmesser des Durchgangsöffnung 11 geweitet oder vergrößert wird. Dadurch kann das Wellrohr 50 in das das Klammerelement 1 kraftlos eingeführt werden.

Kraftlos heißt hier, dass sich das Wellrohr 50 beim Einführen oder Ausführen bzw. Positionieren innerhalb des Klammerelements 1 nicht mit einer Kante oder Eingriffs- bzw. Einklemmfläche 9 des ersten Halteelements 7-1 bzw. mit einer Kante oder Eingriffs- bzw. Einklemmfläche 10 des zweiten Halteelements 7-2 des Deckelelements 30 verhakt. So ist ein kraftloses bzw. relativ widerstandsloses Positionieren des Wellrohrs 50 innerhalb des ersten Ringelements 2 möglich, bevor dieses in seiner Endposition oder Halte-/Klemmposition fixiert wird. Das Fixieren der Position des Wellrohrs 50 erfolgt dabei ganz einfach durch Loslassen des ersten Ringelements 2 bzw. einem Beenden der Krafteinleitung an den jeweiligen Krafteinleitungspunkten, damit das erste Ringelement 2 wieder in seine ursprüngliche Ausgangsposition zurückkehren kann.

Nach erfolgtem Einführen und Positionieren des Wellrohrs 50 greifen dabei die beiden Halteelemente 7-1, 7-2 und deren Kanten 9 bzw. 10 in die Täler des Wellrohrs 50 ein und verhaken sich in diesen bzw. in die Außenfläche oder Außenseite 52 des Wellrohrs 50. Zum Lösen der Fixierung des Wellrohrs muss dann einfach der bereits oben beschriebene Vorgang des Zusammendrückens des ersten Ringelements 2 wiederholt werden.

Grundsätzlich kann das erfindungsgemäße Klammerelement 1 lediglich aus einem - dem ersten Ringelement 2 - bestehen. Die Ausführungsformen der Figuren 1 bis 11 zeigen zwar stets ein Kammerelement 1 das aus einem ersten Ringelement 2 und einem zweiten Ringelement 3 besteht, doch das Ringelement 3 ist als optionale und sinnvolle Alternative anzusehen, welche das Fixieren eines Schutzrohres 80 auf dem Wellrohr 50 weiter verbessert.

Das Klemmelement 1 - so es mit einem ersten Ringelement 2 oder mit einem zweiten Ringelement 3 ausgeführt wird, wird zur Fixierung an ein Schutzrohr 80 auf einen Endabschnitt des Schutzrohrs 80 aufgeschoben und mit diesem in einer Weise fixiert. Dies wird in den nachfolgenden Figuren, insbesondere in den Figuren 3 bis 6, näher erläutert.

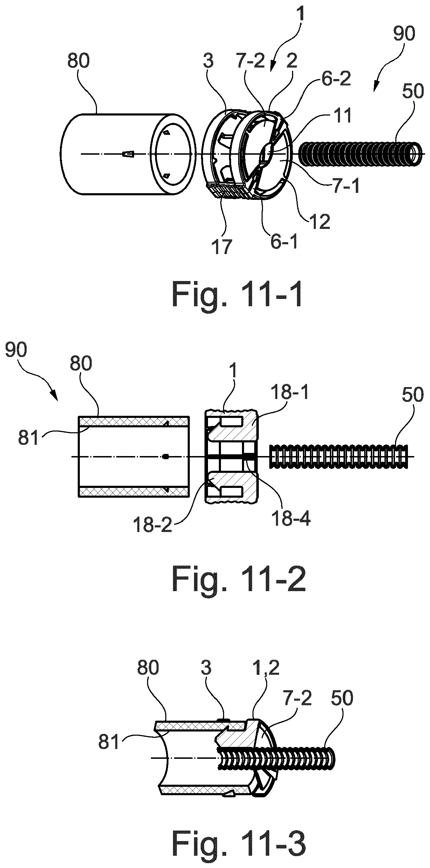

Wie ferner insbesondere in den Figuren 1, 11-1 bis 11-3 zu erkennen ist, weisen die jeweiligen Endabschnitte 10 der sich gegenüberliegenden Halteelemente 7-1, 7-2 in Bezug auf die Längs- oder Mittelachse 5 des Klammerelements 1 einen kleineren Abstand aufweisen als die Endabschnitte 9 der sich gegenüberliegenden Keilelemente 6-1, 6-2, so dass die Öffnung 11 einen Durchmesser aufweist, der kleiner ist als das zu fixierende und aufzunehmende Wellrohr 50. Dies ist hilfreich, da nach erfolgter Einführung des Wellrohrs 50 in das erste Ringelement 2 sich die Endabschnitte 10 der jeweiligen Halteelemente 7-1, 7-2 um die Außenseite 52 des Wellrohrs 50 schließen bzw. in die Außenseite 52 einhaken, um das Wellrohr 50 in einer gewünschten Halteposition zu fixieren bzw. zu halten.

Das Kammerelement 1 weist zu dessen Fixierung an dem Schutzrohr 80 bzw. an dem Wellrohr 50 entsprechende und verschiedenartige Hakenelemente auf. Nachfolgend werden diese Hakenelemente unter Bezugnahme auf die Figuren 2, 3 bis 6 näher beschrieben.

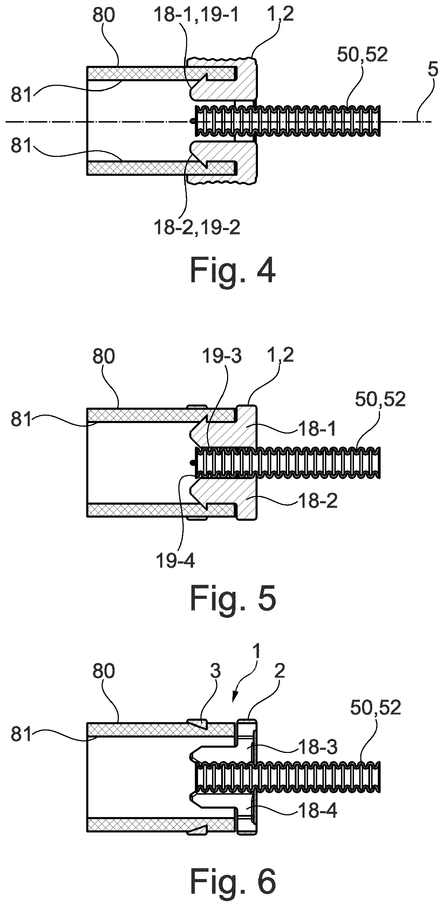

Wie in den Figuren 2 und 4 zu erkennen ist, ist an einem ersten Abschnitt im Inneren 8 des ersten Ringelements 2 mindestens ein erstes Hakenelement 18, 18-1, 18-2 angebracht. Dieses erstreckt sich in einer entgegengesetzten Richtung vom Deckelelement 3 weg sowie in Richtung der Längsachse 5 des Klammerelements 1. Das erste Hakenelement 18-1, 18-2 mit seinen ersten Auflageflächen-/kanten 19-1, 19-2 ist ferner ausgebildet, sich auf einer Innenseite 81 des von dem Klammerelement 1 umschlossenen Schutzrohres 80 einzuhaken, wie es zum Beispiel in den Figuren 4 und 5 dargestellt ist.

Wie ferner in den Figuren 2, 3 bis 6 außerdem zu erkennen ist, ist an einem zweiten Abschnitt im Inneren 8 des ersten Ringelements 2 mindestens ein zweites Hakenelement 18, 18-3, 18-4 angebracht. Dieses zweite Hakenelement 18-3, 18-4 erstreckt sich in einer entgegengesetzten Richtung vom Deckelelement 3 weg sowie in Richtung der Längsachse 5 des Klammerelements 1. Das zweite Hakenelement 18, 18-3, 18-4 ist dabei - wie in den Figuren 5 und 6 gezeigt - ferner ausgebildet, sich auf einer Außenseite 52 des von dem Klammerelement 1 umschlossenen Schutzrohres 80 einzuhaken oder zu verhaken.

Die Figur 2 zeigt außerdem, dass das erste Hakenelement 18-1, 18-2 aus zwei ersten Hakenelementen besteht, die ein erstes Hakenelementepaar bilden, welche in Bezug auf die Längsachse 5 des Klammerelements 1 in radialer Umfangsrichtung des ersten Ringelements 2 gegenüberliegend angeordnet sind und dass das zweite Hakenelement 18-3, 18-4 aus mindestens zwei zweiten Hakenelementen besteht, die ein zweites Hakenelementepaar bilden, welche in Bezug auf die Längsachse 5 des Klammerelements 1 in radialer Umfangsrichtung des ersten Ringelements 2 gegenüberliegend angeordnet sind. Die ersten und zweiten Hakenelemente sind jeweils voneinander beabstandet angeordnet Das erste Hakenelementpaar und das zweite Hakenelementepaar sind auf dem ersten Ringelement 2 versetzt zueinander angeordnet. Die Anzahl der Hakenelemente ist dabei nicht auf die hier in den Ausführungsformen gezeigte Anzahl beschränkt.

Die Figur 4 zeigt dabei eine Ausführungsform des Klammerelements 1 in einer Ausgangs- oder Einführposition. D.h. die zweiten Auflageflächen- bzw. kanten 19-3 bzw. 19-3 der ersten Hakenelemente 18-1 bzw. 18-2 sind derart voneinander beabstandet, dass sie die Außenseite 52 des Wellrohrs 50 nicht oder kaum berühren, so dass sich das Wellrohr 50 leicht und kraftlos in das erste Ringelement 2 des Klammerelements 1 einführen lässt.

Die Figuren 5 und 6 zeigen eine Ausführungsform des Klammerelements 1 in einer End- oder Fixierposition in Bezug auf das Wellrohr 50. Dabei verhaken sich die zweiten Auflageflächen- bzw. kanten 19-3 bzw. 19-4 der ersten Hakenelemente 18-1 bzw. 18-2 mit den Bergen und Tälern der Außenseite 52 des Wellrohrs 50. Anstelle eines Verhakens ist auch ein Klemmen oder Berühren der Hakenelemente 18-1, 18-2 in Bezug auf das Wellrohr 50 möglich, um dieses in einer gewünschten Endposition zu fixieren.

In den Figuren 4 bis 6 ist dabei das Klammerelement 1 bereits auf das Schutzrohr 80 aufgebracht bzw. aufgesteckt und mit diesem fixiert, bevor die Einführung, die Positionierung und die Fixierung des Wellrohrs 50 in das erste Ringelement 2 des Klammerelements 1 erfolgt.

In einer weiteren Ausführungsform des Klammerelements 1 besteht dieses aus einem ersten Ringelement 2 und einem mit dem ersten Ringelement 2 verbundenen zweiten Ringelement 3, wie es in den Figuren 2, 6, 7 bis 11 dargestellt ist.

Das zweite Ringelement 3 ist von dem ersten Ringelement 2 über mindestens ein zweites Verbindungselement 4, 4-1, 4-2 beabstandet angeordnet. Die beiden Ringelemente 2, 3 bilden dabei entlang der Längsachse 5 des Klammerelements 1 einen röhrenförmigen Körper. Alternativ kann das Klammerelement 1 aus einem hohlen zylinderförmigen und länglichen Grundkörper gebildet sein, dass Aussparungen oder Fensterelemente aufweist, um das erste Ringelement 2 als äußeres Ringelement und das zweite Ringelement 3 als inneres, auf das Schutzrohr 80 aufgeschobenes Ringelement auszubilden.

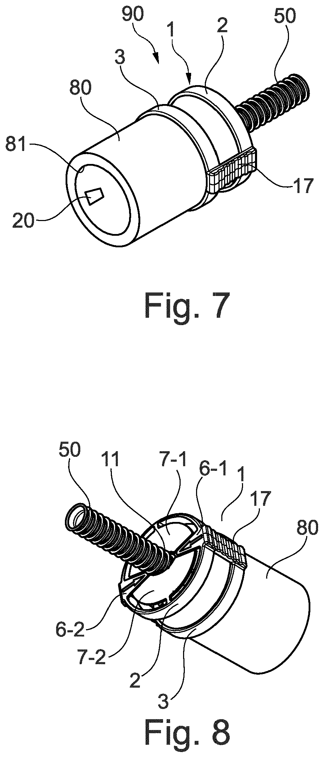

Das zweite Ringelement 3 ermöglicht es, das Klammerelement 1 noch besser mit dem Schutzrohr 80 zu fixieren, indem es auf einen Abschnitt des Schutzrohres 80 aufgeschoben wird (siehe zum Beispiel Figur 7).

Das zweite Ringelement 3 weist optional eine Anzahl von Sperrelementen 15 auf. Diese sind vorzugsweise an einer Innenseite 16 des zweiten Ringelements 3 in radialer Umfangsrichtung des zweiten Ringelements 3 von einander beabstandet angeordnet und diese erstrecken sich zudem in Richtung der Längsachse 5 des Klammerelements 1.

Die Sperrelemente 15 sind keil- und / oder hakenförmig ausgebildet und haben eine entsprechende Form bzw. Erhebung, um sich in die Außenseite des Schutzrohrs 80 einzuhaken oder einzukrallen. Dadurch wird die Fixierung des Schutzrohrs mit dem Klammerelement 1 weiter verbessert.

Die Figur 2 zeigt weiterhin in optionaler Ausführung, dass das mindestens zweite Verbindungselement 4-1, 4-2 zur Verbindung der beiden Ringelemente 2, 3 an seiner Außenseite 17 als eine aufgeraute Verbindungsrippe ausgebildet ist. Auf diese Weise kann das Klammerelement 1 besser gegriffen werden und ein Abrutschen der Finger und Daumen eines Bedieners, insbesondere beim Zusammendrücken des ersten Ringelements 2 wird verhindert. Es ist dabei zu erwähnen, dass auch das zweite Ringelement 3 elastisch verformbar ist und sich beim Zusammendrücken entsprechend aufspreizt.

Das Klammerelement 1 ist vorzugsweise aus einem kunststoffartigen Material gefertigt, um eine kostengünstige und einfache Herstellung zu ermöglichen. Es kann jedoch auch aus anderen geeigneten Materialien bestehen.

Die Figuren 7 bis 11 zeigen eine Hülsenanordnung 90 zum Schützen eines elektronischen Elements 20, wie etwa einen Sensor, das mit einem Wellrohr 50 befestigt ist. Die Hülsenanordnung 90 weist ein Schutzrohr 80 und ein Klammerelement 1 auf, wobei das Klammerelement (1) ausgebildet ist, das Schutzrohr 80 mit dem Wellrohr 50 zu fixieren.

Die Figur 7 zeigt ein Klammerelement 1 mit zweiteiligem Ringelement 2, 3 und Wellrohr 50 verbunden mit einem Schutzrohr 80 in einer Hülsenanordnung 90 gemäß einer Ausführungsform der vorliegenden Erfindung. Dabei ist das Klammerelement 1 mit den beiden Ringelementen 2, 3 auf das Schutzrohr 80 aufgeschoben. Sowohl das Schutzrohr 80 als auch das eingeführte Wellrohr 50 wird von dem Klammerelement 1 auf die zuvor beschriebene Weise gehalten bzw. fixiert.

Die Figur 8 zeigt ein Klammerelement 1 mit zweiteiligem Ringelement 2, 3 und Wellrohr 50, das mit einem Schutzrohr 80, das als Thermohülse ausgebildet sein kann, ist, in einer Hülsenanordnung 90 gemäß einer Ausführungsform der vorliegenden Erfindung. Hier ist insbesondere das erste Ringelement 2 mit dem aufgenommenen bzw. fixierten Wellrohr 50 zu erkennen, welches an einem Abschnitt des Wellrohrs 50 von den beiden Halteelementen 7-1, 7-2 beidseitig eingeklemmt bzw. gehalten wird.

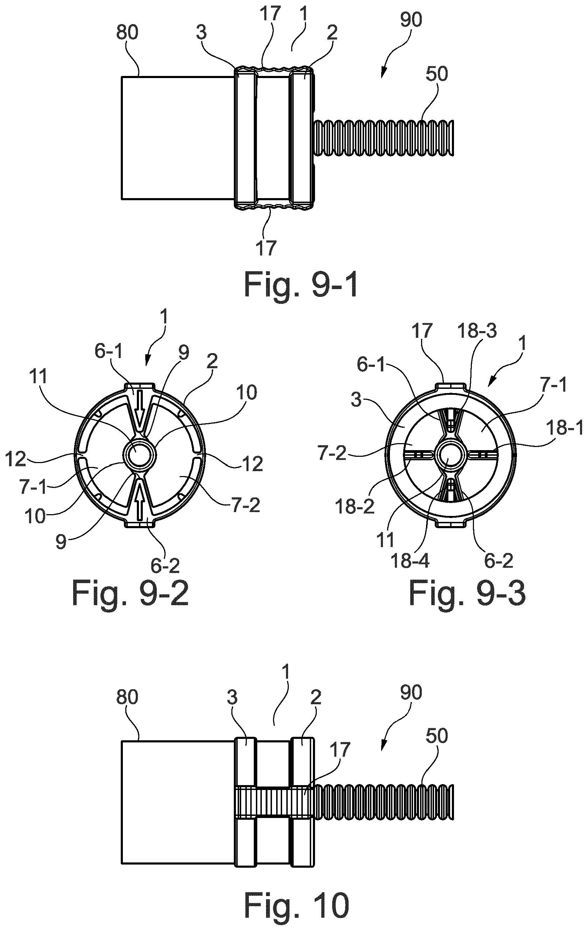

Die Figuren 9-1, 9-2, 9-3 und 10 beziehen sich dabei auf eine gemeinsame Ausführungsform der Hülsenanordnung 90 bzw. zeigt diese in verschiedenen Ansichten, wie nachfolgend kurz beschrieben wird.

Die Figur 9-1 zeigt ein Klammerelement 1 mit zweiteiligem Ringelement 2, 3 und Wellrohr 50, das mit einem Schutzrohr 80 in einer Hülsenanordnung 90 verbunden ist, in Seitenansicht gemäß einer Ausführungsform der vorliegenden Erfindung.

Figur 9-2 zeigt ein Klammerelement 1 mit zweiteiligem Ringelement 2, 3 und eingeführtem und fixiertem Wellrohr 50, das mit einem Schutzrohr 80 verbunden ist, in Vorderansicht in einer Hülsenanordnung 90 gemäß einer Ausführungsform der vorliegenden Erfindung.

Die Figur 9-3 zeigt ein Klammerelement 1 mit zweiteiligem Ringelement 2, 3 und eingeführtem und fixiertem Wellrohr 50, das mit einem Schutzrohr 80 verbunden ist, in Rückansicht in einer Hülsenanordnung 90 gemäß einer Ausführungsform der vorliegenden Erfindung.

Die Figur 10 zeigt ein Klammerelement 1 mit zweiteiligem Ringelement 2, 3 und eingeführtem und fixiertem Wellrohr 50, das mit einem Schutzrohr 80 verbunden ist in einer Hülsenanordnung 90 in Draufsicht gemäß einer Ausführungsform der vorliegenden Erfindung.

Die Figur 11-1 zeigt ein Klammerelement 1 mit zweiteiligem Ringelement 2, 3 und Wellrohr 50 mit einem Schutzrohr 80 in einer Explosionsdarstellung gemäß einer Ausführungsform der vorliegenden Erfindung.

Die Figur 11-2 zeigt ein Klammerelement 1 mit zweiteiligem Ringelement 2, 3 und Wellrohr 50 mit einem Schutzrohr 50 in Explosionsdarstellung im Schnitt von der Seite gemäß einer Ausführungsform der vorliegenden Erfindung.

Die Figur 11-3 zeigt ein Klammerelement 1 mit zweiteiligem Ringelement 2, 3 und einem in das Klammerelement 1 eingeführten und fixierten Wellrohr 50, wobei das Schutzrohr 80 von dem Klammerelement 1 fixiert wird, in einer Explosionsdarstellung im Schnitt gemäß einer Ausführungsform der vorliegenden Erfindung. Details zu den einzelnen Komponenten in den Figuren 7 bis 11 werden nicht mehr wiederholt, da diese insbesondere aus den Figuren 1, 2, 3 bis 6 ebenso zu entnehmen sind.

## Patentansprüche

1. Klammerelement (1) zur Fixierung eines Schutzrohres (80) auf einem Wellrohr (50), aufweisend:
- ein erstes Ringelement (2),
- ein rundes Deckelelement (30), welches stirnseitig an dem ersten Ringelement (2) angebracht ist, wobei das Deckelelement (30) aus einem ersten Keilelement (6-1) und einem gegenüber einer Längsachse (5) des Klammerelements (1) angeordneten zweiten Keilelement (6-2) sowie aus einem ersten Halteelement (7-1) und gegenüber der Längsachse (5) angeordneten mindestens einem zweiten Halteelement (7-2) besteht,
- wobei die Keilelemente (6-1, 6-2) direkt mit dem ersten Ringelement (2) und die Halteelemente (7-1, 7-2) über ein erstes Verbindungselement (12) im Inneren (8) des ersten Ringelements (2) mit dem ersten Ringelement (2) verbunden sind,
- wobei die Keilelemente (6-1, 6-2) und die Halteelemente (7-1, 7-2) jeweils in einer radialen Umfangsrichtung um die Längsachse (5) des Klammerelements (1) voneinander beabstandet sind und sich diese ferner in einer radialen Richtung hin zur Längsachse (5) des ersten Ringelements (2) derart erstrecken, dass jeweilige Endabschnitte (9) der Keilelemente (6-1, 6-2) und Endabschnitte (10) der Halteelemente (7-1, 7-2) eine ovale Öffnung (11) mit einem ersten Durchmesser innerhalb des Deckelelements (30) bilden,
- wobei das erste Ringelement (2) derart elastisch formbar ausgebildet ist, dass bei einem gleichzeitigen Zusammendrücken der beiden Keilelemente (6-1, 6-2) diese sich in Bezug auf die Längsachse (5) des Klammerelements (1) aufeinander zu bewegen und sich deren Abstand zueinander verringert und dabei gleichzeitig die an die Keilelemente (6-1, 6-2) angrenzenden Halteelemente (7-1, 7-2) von der Längsachse (5) wegbewegen und auseinander gezogen werden und sich deren Abstand zueinander vergrößert, sodass sich die Öffnung (11) von dem ersten Durchmesser auf einen zweiten Durchmesser vergrößert.

2. Klammerelement (1) nach Anspruch 1, wobei die Endabschnitte (10) der sich gegenüberliegenden Halteelemente (7-1, 7-2) in Bezug auf die Längsachse (5) des Klammerelements (1) einen kleineren Abstand aufweisen als die Endabschnitte (9) der sich gegenüberliegenden Keilelemente (6-1, 6-2), so dass die Öffnung (11) einen Durchmesser aufweist, der kleiner ist als das zu fixierende und aufzunehmende Wellrohr (50).

3. Klammerelement (1) nach einem der vorangegangenen Ansprüche, wobei an einem ersten Abschnitt im Inneren (8) des ersten Ringelements (2) mindestens ein erstes Hakenelement (18, 18-1, 18-2) angebracht ist, welches sich in einer entgegengesetzten Richtung vom Deckelelement (30) weg sowie in Richtung der Längsachse (5) des Klammerelements (1) erstreckt, wobei das erste Hakenelement (18-1, 18-2) ferner ausgebildet ist, sich auf einer Innenseite (81) des von dem Klammerelement (1) umschlossenen Schutzrohres (80) einzuhaken.

4. Klammerelement (1) nach einem der vorangegangenen Ansprüche, wobei an einem zweiten Abschnitt im Inneren (8) des ersten Ringelements (2) mindestens ein zweites Hakenelement (18, 18-3, 18-4) angebracht ist, welches sich in einer entgegengesetzten Richtung vom Deckelelement (30) weg sowie in Richtung der Längsachse (5) des Klammerelements (1) erstreckt, wobei das zweite Hakenelement (18, 18-3, 18-4) ferner ausgebildet ist, sich auf einer Außenseite (52) des von dem Klammerelement (1) umschlossenen Schutzrohres (80) einzuhaken.

5. Klammerelement (1) nach Anspruch 4 oder 5, wobei das erstes Hakenelement (18-1, 18-2) aus mindestens zwei ersten Hakenelementen besteht, welche in Bezug auf die Längsachse (5) des Klammerelements (1) in radialer Umfangsrichtung des ersten Ringelements (2) gegenüberliegend angeordnet sind und / oder wobei das zweite Hakenelement (18-3, 18-4) aus mindestens zwei zweiten Hakenelementen besteht, welche in Bezug auf die Längsachse (5) des Klammerelements (1) in radialer Umfangsrichtung des ersten Ringelements (2) gegenüberliegend angeordnet sind.

6. Klammerelement (1) nach einem der vorangegangenen Ansprüche, umfassend ein zweites Ringelement (3), welches von dem ersten Ringelement (2) über mindestens ein zweites Verbindungselement (4, 4-1, 4-2) beabstandet angeordnet ist und wobei beide Ringelemente (2, 3) entlang der Längsachse (5) des Klammerelements (1) einen röhrenförmigen Körper bilden.

7. Klammerelement (1) nach Anspruch 6, wobei das zweite Ringelement (3) mindestens ein Sperrelement (15) aufweist, welches an einer Innenseite (16) des zweiten Ringelements (3) angeordnet ist und sich in Richtung der Längsachse (5) des Klammerelements (1) erstreckt.

8. Klammerelement (1) nach einem der vorangegangenen Ansprüche, wobei das Klammerelement (1) aus einem kunststoffartigen Material besteht.

9. Klammerelement (1) nach einem der vorangegangenen Ansprüche, wobei das mindestens erste Verbindungselement (4, 4-1, 4-2) zur Verbindung der beiden Ringelemente (2, 3) an seiner Außenseite (17) als eine aufgeraute Verbindungsrippe ausgebildet ist.

10. Hülsenanordnung (90) zum Schützen eines elektronischen Elements (20), das mit einem Wellrohr (50) befestigt ist, umfassend ein Schutzrohr (80) und ein Klammerelement (1) nach einem der vorangegangenen Ansprüche, wobei das Klammerelement (1) ausgebildet ist, das Schutzrohr (80) mit dem Wellrohr (50) zu fixieren.
